# EUROPEAN PATENT SPECIFICATION

(11) **EP 0 990 111 B1**
(45) Date of publication and mention of the grant of the patent: **03.03.2004**
(21) Application number: 98922404.3
(22) Date of filing: 14.05.1998
(51) Int. Cl.: F28F 21/08, F28D 9/00, F28F 19/06, C23C 10/28, C23C 16/12

(54) **TITANIUM BASED METAL HEAT EXCHANGERS AND METHOD OF MANUFACTURE**
METALLWÄRMETAUSCHER AUF TITANBASIS UND VERFAHREN ZU DESSEN HERSTELLUNG
ECHANGEURS THERMIQUES EN METAL A BASE DE TITANE ET LEUR PROCEDE DE FABRICATION

(30) Priority: 30.05.1997 US 865905
(43) Date of publication of application: 05.04.2000
(73) Proprietor: Honeywell International Inc., Morristown, New Jersey 07962-2245 (US)
(72) Inventor: RAYBOULD, Derek, Denville, NJ 07834 (US); POHLMAN, Matt, Huntington Beach, CA 92648 (US); FANELLI, Anthony, J., Rockaway, NJ 07866 (US)
(74) Representative: Hucker, Charlotte Jane
(86) International application number: PCT/US1998/010147
(87) International publication number: WO 1998/054531

(56) References cited:
- EP-A- 0 518 590
- EP-A- 0 671 240
- GB-A- 2 252 981
- JP-A- 2 085 694
- US-A- 4 936 927
- US-A- 5 110 035
- US-A- 5 564 496
- US-A- 5 672 436
- PATENT ABSTRACTS OF JAPAN vol. 097, no. 004, 30 April 1997 & JP 08 325750 A (AISIN SEIKI CO LTD), 10 December 1996

## Description

### Field of the Invention

This invention relates generally to titanium based metal heat exchangers. This invention teaches the use of oxidation resistance titanium based metal heat exchanger components for extended and reliable operation in aerospace application in a temperature range in excess of the 371 - 482°C (700 - 900°F) temperature range generally considered to be the maximum operatmg temperature for titanium metal components The present invention provides a practical light weight and reliable heat exchanger comprising titanium. or alloys of titanium. or braze clad titanium.

### Background of the Invention

Heat exchangers can be used as core elements in larger systems such as the heat regenerators or recuperators that are useful to capture, transfer and recycle heat from one fluid, such as an exhaust fluid, to another fluid, such as an intake fluid. Valuable use of otherwise waste exhaust heat can be made by. for instance, using a heat exchanger to preheat an intake fluid. Light weight and reliable heat exchangers are particularly useful in aerospace applications to contribute to improved fuel efficiency. In many application it is critical that the two fluids remain separated to avoid contamination or other unintended results. Cracks in the heat exchanger can give rise to loss of efficiency as well as fluid contamination. Titanium and its alloys comprise light weight material and can provide a reduction of up to 40% over the comparable weight of conventional high temperature heat exchangers, allowing for an even broader range of heat exchanger use in aircraft applications to for instance improve fuel efficiency. However. titanium is heretofore considered unsuitable for such heat exchanger applications as the oxidation or nitriding of the titanium significantly reduces the required material properties and compromises structural integrity: repeated thermal cycling of a heat exchanger between operating temperatures in excess of 371 - 482°C (700 - 900 °F) and ambient temperature causes the metal components to crack and heat exchanger performance to deteriorate.

Titanium is light weight and corrosion resistance however its operating temperatures are low. Currently, titanium is not used for high temperature, ie. in excess of 482°C (900°F) heat exchanger applications. such as aircraft applications. because titanium exhibits a propensity to rapidly oxidize at the required operating temperatures. Oxidation of titanium results in a reduction in ductility and then strength, so that a titanium heat exchanger fabricated without a means of protection from oxidation will deteriorate in structural integrity at temperatures in excess of 371 - 482°C (700 - 900 °F).

### Objects and Summary of the Invention

It is. therefore, an object of the present invention to overcome the above-noted known drawbacks of titanium to produce a useful and reliable titanium metal based heat exchanger device.

It is another object of the present invention to provide a titanium based heat exchanger that has been specially treated to achieve oxidation resistance to thereby avoid a deterioration in the metal properties that is otherwise attributed to detrimental oxidation and or nitriding.

It is still another object of the present invention to provide a titanium based heat exchanger, wherein that is operable in excess of the temperature range 371 - 482°C (700° - 900°F) up to 760°C (1400°F).

It is a further object of the present invention to provide a titanium based heat exchanger, wherein titanium based metal parts or core are specially treated to form an oxidation and nitride resistant surface covering.

According to the present invention, a titanium-based metal heat exchanger operable at a temperature in excess of 482°C (900°F), is defined in claim 1.

In one embodiment the oxidation resistant protective layer can comprise a conversion coating such as a gaseously deposited aluminum coating that is heat treated to form a titanium aluminide coating having an aluminium oxide surface, completely covering all of the complex shapes of a heat exchanger.

In a further preferred embodiment of the present invention provides a titanium-based heat exchanger having a titanium aluminide coating having an aluminium oxide surface, which in turn is coated with an alumina, silica or zirconia solgel coating. This preferred embodiment of the present invention is defined by claim 6.

It is a further object of the present invention to provide a titanium-based heat exchanger. wherein the titanium brazes are also protected with a oxidation and nitride resistant surface covering to avoid embrittlement and deterioration. As is well known. during assembly, a the heat exchanger pans are braze coated and stacked to form an assembly The stacked assembly is then heat treated to from a brazed and unified whole. In the brazing process, titanium material can be wicked to concentrated in a braze fillet. It is thus important that the fillets also be treated to form an oxidation and nitride resistant surface covering to avoid deterioration. Such a heat exchanger, in which the protective layer covers all exposed parts of the heat exchanger, is defined in claim 8.

The afore described conversion coating can be applied by various methods. For instance. an aluminum based conversion coating can be applied by gaseous deposition and solgel type coatings can be applied by dip coatings, both of which have been found to be effective in achieving the desired uniform coatings for establishing oxidation and nitride resistant surface coverings for the fillets.

According to the present invention, a method for manufacturing a titanium-based metal heat exchanger which is operable at a temperature in excess of 482°C is defined in claim 9. Further, this solgel coating provides oxidation protection when applied either directly to the titanium, manium aiuminide. or brazed titanium.

### Brief Description of the Drawings

The invention will become more readily apparent from the following description of preferred embodiments thereof, illustrated. by way of examples, in the accompanying drawings, in which:
Fig. 1 illustrates a first embodiment of a titanium based metal heat exchanger according to the present invention, in a sectional view and in a schematic fashion.
Fig. 2 illustrates how oxidation of the oxidation resistant alloy, but uncoated Ti21S results in a brittle alloy with no strength.
Fig. 3 illustrates how the aluminum coating diffuses into the titanium while the titanium diffuses out. note also the aluminum oxide outer layer.
Fig. 4 illustrates how titanium alloys treated in accordance with the invention and exposed to 704°C (1300°F) even for 4,000 hours are oxidation resistant and results in an acceptable weight gain, even for the easily oxidizable alloy Ti 32.5.
Fig. 5 illustrates how only a solgel coating provides oxidation protection at 704°C (1300°F) for 192 hours to Ti21S and how the weight gain for both the solgel zirconia coating and solgel alumina coatings are comparable.
Fig. 6 illustrates how the weight gain of a complex honeycomb fabricated from Ti32.5 and aluminum coated is the same per unit area as for a simple shape indicating that the aluminum coating has completely covered the complex shape and can provide oxidation protection to the complex shape. The loss in weight of uncoated Ti 32.5 indicates that oxide scale has fallen off the sample. Fig. 7 illustrates how the coatings withstand thermal cycling between 704°C (1300°F) and room temperature every 15 minutes for 500 hours and the resultant weight gain or loss is the same as for static oxidation

### Description of the Preferred Embodiments

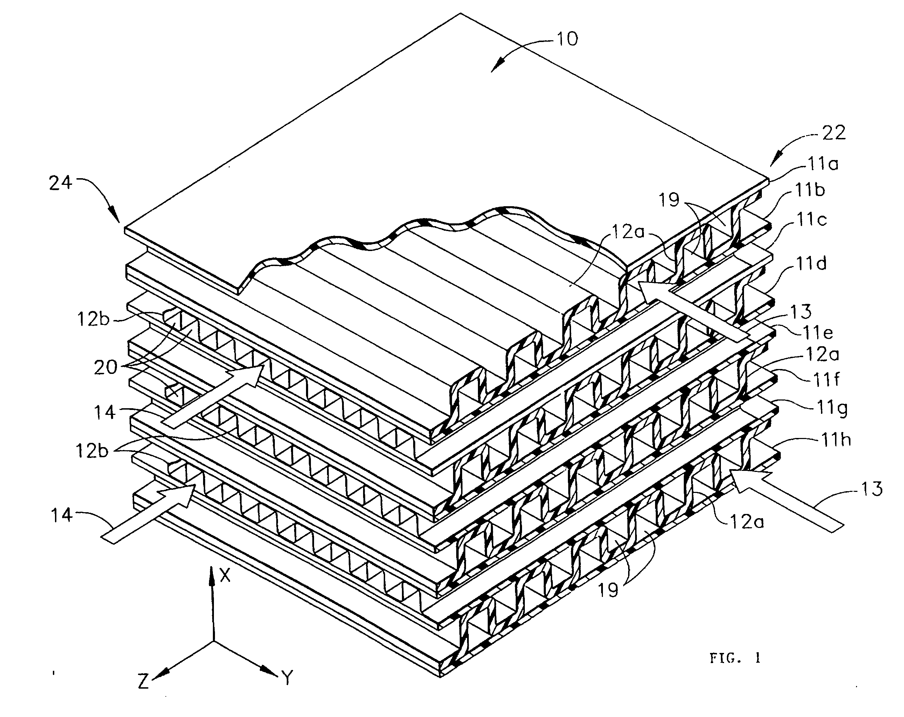

With reference to the drawing, wherein like parts are identified by the same reference characters. it can be seen that Fig. 1 illustrates in perspective and in a schematic fashion the first embodiment of a titanium based metal heat exchanger 10 in accordance with the present invention. The titanium based metal heat exchanger 10 comprises a plurality of flat parallel plates 11 are separated from each other by spacers or fin sheets 12 and stacked in alternation to form structure comprised of alternating plates 11 and spacers or fin sheets 12. The alternating plates 11a and 11b define a first fluid flow passages 13 therebetween and the alternating plates 11b and 11c define a second fluid flow passages 14 therebetween.

The plates 11 are preferably fabricated of a titanium based metal material in any desired configuration although rectangular shapes are typical. It is intended that the plates 11 be leak proof, and stacked to form alternate passes for the fluids 19 and 20, to flow therebetween. Surface enhancements in the form to increase surface area or roughness can be added to increase heat transfer. Braze clad bonding can be used to attach the fin sheets 12 to the plates 11 and form a unified and structurally sound heat exchanger core. Before stacking, the plates 11 and mating surfaces of the fin sheet 12 can be brazed coated to facilitate the subsequent assembly a brazed heat exchanger core.

In accordance with the present invention, the fin sheets 12 are preferably formed by for instance die stamping a titanium based metal sheet like stock. The fin sheets 12 can be inserted between alternating plate 11 to separate adjacent plates 11 and form the respective fluid flow passageways 13 and 14. Typically, the fins 12 comprise a corrugated or wave like structure that is preferably continuous and uniform throughout the sheet. Each fin 12 has a substantially planar heat transfer surface 12a that is inserted within a fluid flow such that the plane of the fin is parallel to the direction of the fluid flow, to thereby minimize the flow resistance that the fin would otherwise impose on the flowing fluid. The fin sheet 12 can be made in other geometry's to enhance the transfer of heat from the fluids to the heat exchanger material. Surface enhancements such as artificial surface roughness or louvers may be included to improve hat transfer. It is intended that the corrugated fin sheets 12 can be placed between adjacent plates 11 and bonded to the plates 11 to form an integrated structure. Braze clad bonding can be used to attach the fin sheet 12 to the plate 11 and form a unified and structurally sound heat exchanger core.

In operation a fluid 19 flows between plates 11a and 11b while fluid 20 flows between plates 11b and 11c. For easier understanding, in this example, the two passageways formed by the plates 11 are identified as the hot passageway 13 and the cold passageway 14 respectively The second passageway 14 is most frequently oriented to facilitate the flow of the second fluid 20 transverse to the flow of the first fluid 19 in the first passageway 13. For instance the fluids 19 an d 20 can flow at an angle of approximately 90° to each other or the fluids can flow at an angle of approximately 180° to each other so that the flows are nearly parallel and establish a counterflow heat exchanger. In a preferred embodiment, the plates 11 can be successively stacked to form alternating first and second passageways 19 and 20 until the assembly as a whole provides the desired heat transfer or exchange capability.

Provision can be made to assist the fluid entry into and exit from the heat exchanger 10. Typically. manifolds are used to fulfill this function. Counterflow heat exchangers, wherein two different fluid enter and exit on the same face of the core require the various flow control or blocking constructions to enable fluids to be delivered by a manifolds to the desired fluid pass. End bars to can be applied to an end of a passage or a portion of a passage to restrict or close a portion of the passage entry or exit to ensure fluids flow are confined to the selected pass. Other special features can be such as those disclosed US Patent 4,246,963 to Anderson for a Heat Exchanger and US Patent 4,352,273 to Kinsell for a Fluid Conditioning Apparatus and System and assigned to the assignee of the present invention, can also be included in the titanium-based metal heat exchanger of the present invention.

In operation, the first and second fluids 19 and 20 respectively flowing in the first and second passageways 13 and 14 respectively are preferably at different temperatures to facilitate the heat transfer from one passage to the other. For instance. the first fluid 19 can be hotter than the second fluid 20. When this hotter fluid 19 flows in the first passageway 13 heat is transferred from the fluid to the first fins 12 and to the plates 11a and 11b. Heat is then transferred from this second plate 11b to the fins 12 in the passageway 14 and to the cooler fluid 20. The second fluid 14 exits and flows from the heat exchanger 10 and carries the exchanged heat awav from the heat exchanger 10 allowing a heat energy to be continuous transferred from a continuous flow of hot fluid to continuous flow of cold fluid.

The two fluids 19 and 20, in addition to being at inherently unequal temperatures. are also at unequal pressures. The plates 11 must be of a thickness sufficient to provide structural integrity between fluid passages 13 and 14 but sufficiently thin to minimize weight and not interfere with heat transfer. Plate thickness must be gauged to account for the fluid pressure difference between passageways 13 and 14 as this difference tends to bend the plates. The close spacing of the fins 12 results in small unsupported cross sectional areas of the plates 11. Therefore, the fins 12 enhance structural integrity and help keep the plates 11 flat. The present invention maintains adequate ductility so that the plates can handle structural forces typically seen for high temperature heat transfer applications.

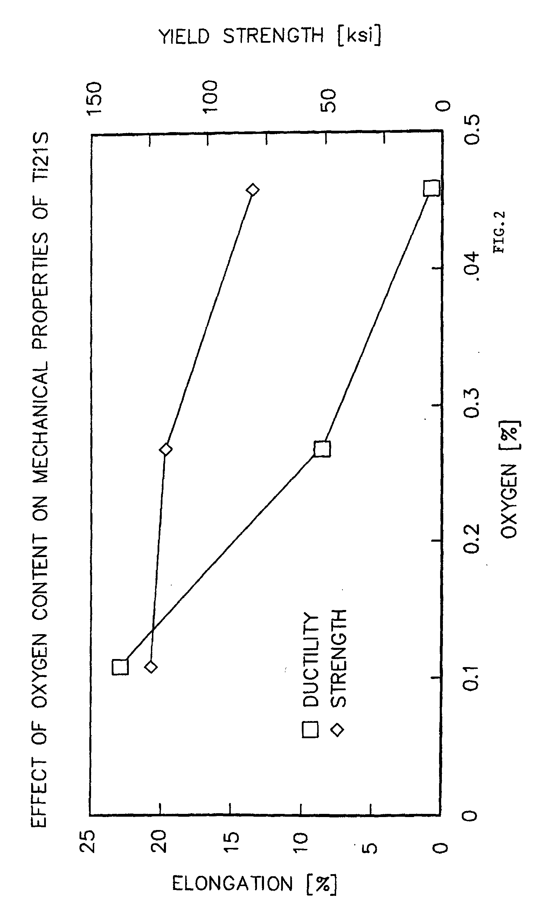

Further concerns about the overall thermal gradient of the heat exchanger 10 must also be taken into account. The heat exchanger 10 transfers heat from one fluid to the other. Therefore if the hot fluid 19 enters the passageway 13 as shown in the drawing, the inlet end of passage 13 is hotter than the exit end. Similarly, the cold fluid 20 entering the passageway 14 is colder at the inlet and warmer at the exit. Thus. the corner 22 of the heat exchanger where the hot fluid enters and the cold fluid exits may be at a much higher temperature than the opposite comer 24 where the cold fluid enters and the hot fluid exits. This thermal gradient within the heat exchanger 10 structure reduces the amount of heat which can be transferred. In metal heat exchangers the hot section expands much more than the cold section which sets up adverse stresses within the material and reduces heat exchanger life. Repeated cycling of temperatures and pressures caused by varying operating conditions further reduces strength and life by the repeated expansion and contraction of all parts of the heat exchanger. If oxidation of the titanium is not prevented the life of the heat exchanger and its ability to withstand thermal cycling is greatly reduced. The degradation of the mechanical properties of uncoated Ti21S as a result of oxidation is shown in Fig. 2. obviously the life of an heat exchanger would be very short once oxidation has reduced the ductility of the titanium to zero.

Use of a titanium based metal for such severe heat exchanger application is facilitated by the present invention wherein the titanium based metal is specially treated to avoid embrittlement. More particularly oxidation of the titanium or braze clad titanium is prevented by a coating 30 that can be applied to protect or transform the titanium surface. In this example conversion coating in a gaseous phase can be applied to and deposited on an assembled and brazed heat exchanger assembly to ensure coverage of all of the exposed parts of the complex heat exchanger configuration. This coated assembly is then heat treated in a vacuum furnace (not shown) to activate the conversion coating and transform the titanium into an oxidation resistant titanium aluminide with an alumina surface. which also prevents oxidation. In this example the uaseously deposited conversion coating can be aluminum in a thickness of 1-40 microns. Upon heat treatment and activation, the aluminum interacts with the titanium to form an oxidation resistant titanium aluminide. The resultant coating provides oxidation resistance both at 704°C and 760°C (1300 and 1400°F) as the mechanical properties of Al coated Ti21S after 200 hour exposure to temperature show. Table 1, in which YS denotes yield strength and UTS denotes ultimate tensile strength.

**Table 1**

| The mechanical properties of uncoated and Al coated Ti21S after exposure to 704°C & 760°C (1300 & 1400 °F) for 192 hours. | | | | | |
|---|---|---|---|---|---|
| Alloy + Coating | Temp, °C [°F] | YS, kg/cm² [ksi] | UTS, kg/cm² [ksi] | Elongation, % | Weight Gain, µg/cm² |
| Ti21S | 704 [1300] | 11 [70] | 12 [75] | 0.5 | 1160 |
| Ti21S + Al | 704 [1300] | 18.1 [117] | 20 [130] | 10.7 | 50 |
| Ti21S | 760 [1400] | - | 12 [75] | ~0.0 | 2600 |
| Ti21S + Al | 760 [1400] | - | 17.2 [111] | 13.6 | 100 |

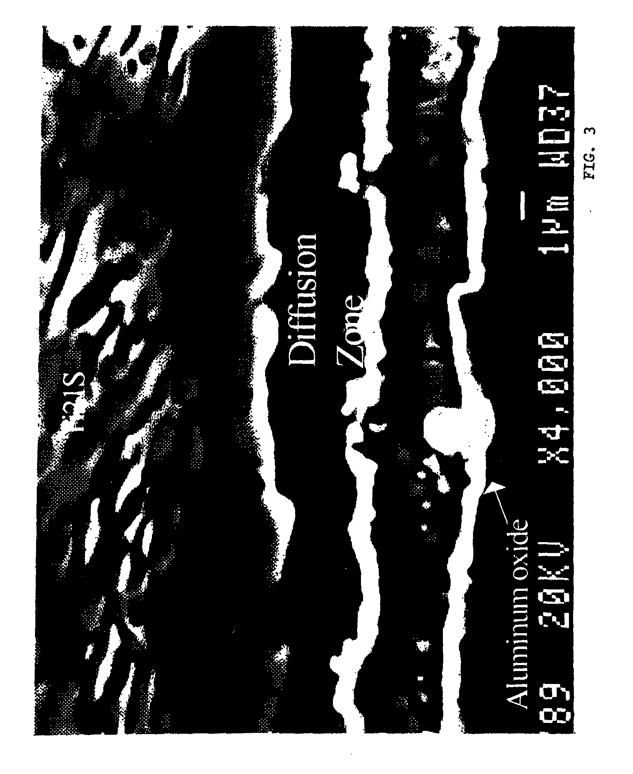

The resulting surface structure of the titanium metal component is illustrated in Fig. 3 when in the aluminum migrates into the surface of the titanium metal to form a diffusion zone when the concentration by weight of titanium gradually decreases from 100% in the body to less than 10% near the surface, while the concentration by weight of aluminum gradually decreases from 100% at the surface to less than 10% near in the bodv. The migration and transformation of titanium to titanium aluminide occurs at temperatures around 649°C (1200°F). There is also a surface layer of an aluminum oxide, left from the aluminum coating, which also provides oxidation protection.

Heating and cooling must be should be controlled to avoid cracking the aluminide layer. The conversion coating can be successfully applied by mechanical processes, such as roll bonding, or gaseous processes, such as physical vapor deposition (PVD) or low temperature chemical vapor deposition (LTCVD) preferably in a layer thickness in the range of 1 to 40µm layer. The deposited aluminum can be transformed to titanium aluminide bv heat treatment under vacuum to around 649°C (1200 °F) with a hold. Typically heating is at 93°C (200°F) per hour after 538°C (1000°F) followed by a 30 minutes hold and the cooling rate is also around 93°C (200°F) down to 538°C (1000°F)

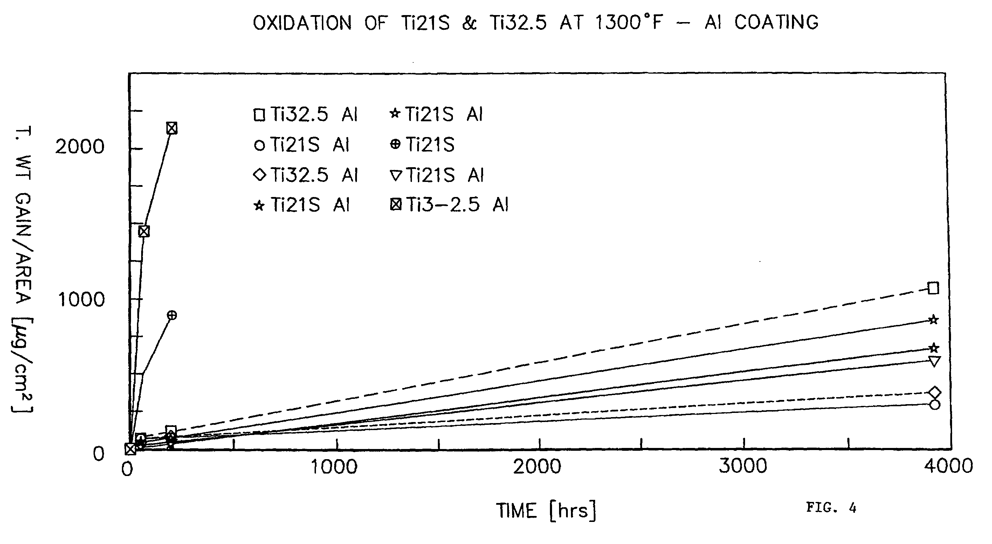

Heat treatment of the conversion coating results in the establishment of an extremely oxidation resistant coating which protects the titanium from further oxidation and embrittlement even after exposure for 4.000 hours at 704°C (1300°F), as is shown in Fig. 4. The present invention can provide oxidation protection not only to the oxidation resistant titanium alloy such as Ti21S, but also to pure Ti and simple alloys such as Ti 32.5, as is shown in Fig. 4. The mechanical properties of these samples are given in Table 2.

**Table 2**

| The mechanical properties of Al coated Ti21S and Ti 32.5 after exposure to 704°C (1300°F) for 4.000 hours. | | | | |
|---|---|---|---|---|
| Alloy + Coating | Temp, °C [°F] | YS, kg/cm² [ksi] | UTS, kg/cm² [ksi] | Elongation % |
| Ti 32.5 + Al | 704 [300] | 6.4 [41] | 13 [86] | 14 |
| Ti 32.5 + Al | 704 [1300] | 10 [65] | 13 [83] | 17 |
| Ti21S + Al | 704 [1300] | 17.8 [115] | 19 [121] | 4 |
| Ti21S + Al | 704 [1300] | 18.1 [117] | 18.3 [118] | 5 |

In an alternate embodiment. the coating 30 can comprise a zirconia based solgel dip coating that can be applied as a wash coat, directly to the titanium or a titanium, aluminide surface, to again ensure that the entire complex shape of the heat exchanger 10 is completely coated. Unlike other solgel coatings, a zirconia based coating can be applied at a low temperatures 316 - 649°C (600 - 1200°F), so oxidation of the uncoated titanium is avoided. Further, the zirconia coating may be rapidly heated and cooled during application. The zircoma coating may be fired by placing it directly in a pre heated furnace and after around a 30 min hold directly removed. The solgel coating 30 is preferably applied through multiple dips . A preferred process applies the solgel coating in three (3) dips wherein the coatings of the first 2 dips are fired at a low temperature 316 - 649°C (600 - 1000°F) for 30 minutes (time), a temperature at which the Ti has minimum or no oxidization the final or third dip can therefore be fired in air at 316 - 649°C (600 to 1200°F) for 30 minutes (time) with no oxidation of the titanium. This rapid firing in air is a marked advantage over the usual 704 - 816°C (1300 to 1500°F) firing which would have to have been carried out in a vacuum furnace.

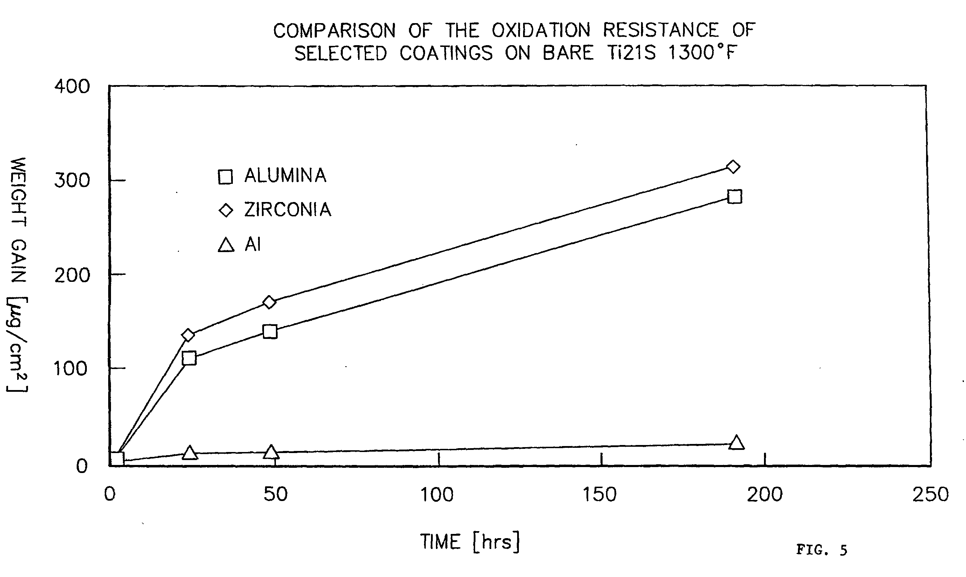

Alternate solgel coatings are alumina or silica. Alumina can be readily applied directly to the titanium alloy or to the titanium aluminide coating to provide oxidation protection. Its advantage is that it has a higher thermal conductivity than zirconia. A disadvantage of alumina is that the final firing preferable occurs at higher temperatures than the zirconia, 538 to 704°C (1000 to 1300°F), however, because the initial coatings can also be carried out at a low temperature the final firing can be carried out in air like the zirconia with no oxidation of the titanium, as for the zirconia we have reduced the firing temperature below the usual 816°C (1500°F), which would have necessitated a vacuum furnace to avoid oxidation of the titanium and would also have deteriorated the mechanical properties because of metallurgical considerations such as over-aging. The comparable oxidation resistance of zirconia and alumina coatings applied to bare Ti 21S is illustrated in Fig. 5.

The conversion coatings not only provide oxidation resistance for an elevated temperature titanium alloy Ti 21S, but also to conventional alloys, such as Ti 3 2.5. The coatings also provide oxidation resistance at 704°C (1300°F) to braze coated titanium.

In a method of manufacturing a light weight titanium based metal heat exchanger for operation in excess of 510°C (950°F) comprising, first, second and third plates, at least one of which is titanium based. A first spacer 12 can be inserted between the first and second plates 11a and 11b respectively for separating the first and second plates 11a and 11b respectively to form a first passage 13 for receiving a first fluid 19 there through. A second spacer 12 inserted between the second and third plates 11b and 11c respectively to form a second passage 14 for receiving a second fluid 20 there through, thereby forming a heat exchanger core wherein heat is transferred from the first fluid 19 by conduction through the second plate 11b to the second fluids 20. The heat exchanger core 10 can then be covered with an appropriate coating that can be gaseously or dip deposited on all exposed titanium surfaces.

The zirconia solgel coating can be applied by a wash coat. The heat exchanger core is dipped in a solution with a carefully controlled viscosity and then slowly withdrawn so a thin coating is applied, after drying, it is fired at 538°C (1000°F). In a typical solgel process, the coated titanium based substrate are hydrolyzed and subsequently polymerized in a controlled humidity environment. The polymeric films are dried and sintered at elevated temperature to pyrolize off the organic groups and form a thin protective oxide film. Work on an actual heat exchanger showed that conventional solgel solutions had too high a viscosity, ie 0.2 Pa.s (+200 centipoise), with the result that not only was complete coating of the complex shape difficult and instead of a thin coating as formed on a simple geometry the solgel could not be drained from inside the passages and so dried to a thick layer which blocked the passages. Blowing air through the passages alleviated, but did not avoid this problem. It was found essential that the viscosity of the solgel be carefully controlled to below 0.1 Pa.s (100 centipoise). Further, this solgel coating provides oxidation protection when applied either directly to the titanium, titanium aluminide, or brazed titanium.

Cracking of the aluminide layer is a particular concern as it will result in oxidation of the titanium in the cracked area, and as oxygen diffuses quickly in titanium and one crack can result in the oxidation of the complex part. Our initial work on aluminum conversion coating resulted, after much experimentation, in a coating which, due to these cracks, had at best only 1% elongation after exposure to 704°C (1300°F) for 192 hours compared to the 10% we routinely obtain now. These problems have been overcome by careful heating and cooling during conversion and transformation and by optimization of the coating thickness The resultant coatings avoid oxidation up to 816°C (1500°F) rather than the 538°C (1000 °F) usually investigated.

Solgel coatings have also been looked at previously. The present zirconia and alumina coatings however have the advantage of a rapid firing cycle at a " low " temperature such as 700 - 704°C (1300°F). Control of coating thickness to produce a uniform thin layer has reduced the number of cracks common in solgel coatings. Presumably, because of these cracks, our initial work did not provide protection to "bare" titanium.

An important refinement of the disclosure is the fact that the aluminum and solgel coatings can be applied to either bare titanium or to braze clad titanium. Heat exchangers are fabricated by brazing together sheet and tubes. therefore most of their "tubes" and "fins" are coated with the braze alloy. This wide and sudden variation in surface composition is a unique situation. It is therefore essential that the braze alloy can also be protected from oxidation as well as the bare metal, which usually is at the manifolds and ends of the fins. An important aspect of this work is the development of coatings and thermal cycles that are compatible with the titanium alloy and also with the braze alloy. Protection of one, but not the other, would be of no benefit and separate coatings for each are not technically or economically desirable due to the complexity of the heat exchangers shape and the complex transitions from bare to braze clad titanium. Not only do the aluminum and solgel coatings protect both from oxidation, but they are able to withstand the different thermal stresses due to thermal cycling set up by either titanium or braze clad titanium.

Braze clad Ti21S was aluminum coated using gaseous deposition and then transformed by the application of heat to an aluminde, as described. The mechanical properties after exposure to 704°C (1300°F) for 192 hours are excellent showing no loss in properties either from oxidation or the braze, Table 3.

**Table 3**

| The mechanical properties of Al coated braze clad Ti21S after exposure to 704°C (1300°F) for 4,000 hours. | | | | |
|---|---|---|---|---|
| Alloy + Coating | Temp., °C [°F] | YS, kg/cm² [ksi] | UTS, kg/cm² [ksi] | Elongation % |
| Ti21S + Al | 704 [1300] | 16 [~100] | 20 [130] | 15 |

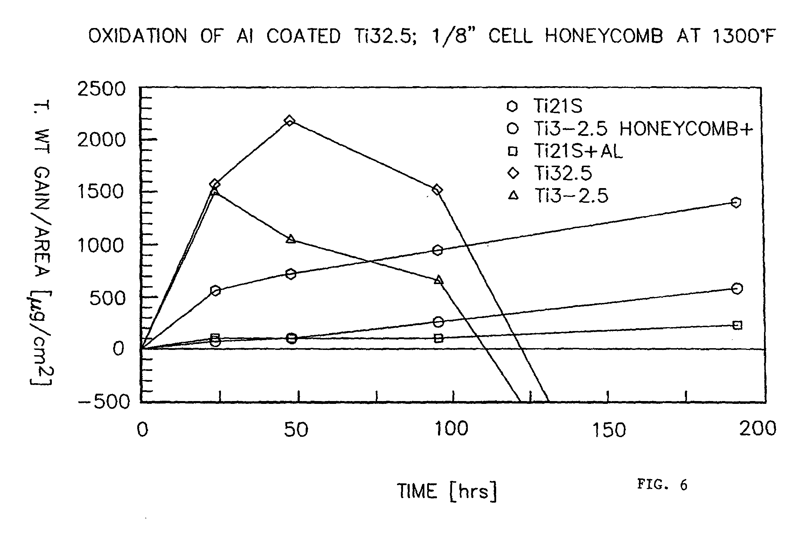

To fabricate an heat exchanger it is essential that protection be obtained for a complex geometry part. To demonstrate the feasibility of coating such a complex shape, honeycomb shapes were fabricated from the simple alloy Ti 32.5, these were then aluminum coated and heat treated to form the aluminide. These parts were exposed to 704°C (1300°F) for 192 hours with the weight gain of the part being measured. Even though the honeycombs have a complex shape, their surface area is relatively well known. Using this and the weight gain we calculated the weight gain per surface area. It was identical to that obtained for simple flat test bars, Fig. 6 showing that the aluminum coating had coated and more importantly protected the entire honeycomb. Ti 32.5 was used for this honeycomb because it does oxidize easily and differences in oxidation protection would show up as a large difference in weight gain.

To determine if even more complex shape of an heat exchanger could be coated a sample heat exchanger made from steel was coated internal and externally with aluminum using gaseous deposition. Core holes were them drilled at different locations within the heat exchanger so as to determine the thickness of the aluminum coating both inside within the tubes and on the fins at different locations and on the exterior of the unit. All the samples had an aluminum coating thickness within our preferred range.

Honeycomb shapes and relatively simple heat exchangers have also been coated with the solgel coating. As indicated initial work using conventional solgel coating solutions in difficulty in coating all of the heat exchanger and even more in draining excess solution off with the result that the tubes and passage ways were blocked with the coating. It was necessary to develop solutions that have a controlled low viscosity of less than 0.1 Pa.s (100 centipoise), and whose viscosity does not change with time or with changes in the rooms humidity. Using low viscosity solutions heat

It is understood that the heating and cooling rates and hold times given will need to be modified for specific furnaces and also to be extended for large complex parts such as an heat exchanger in order to ensure adequate heating of the complete structure.

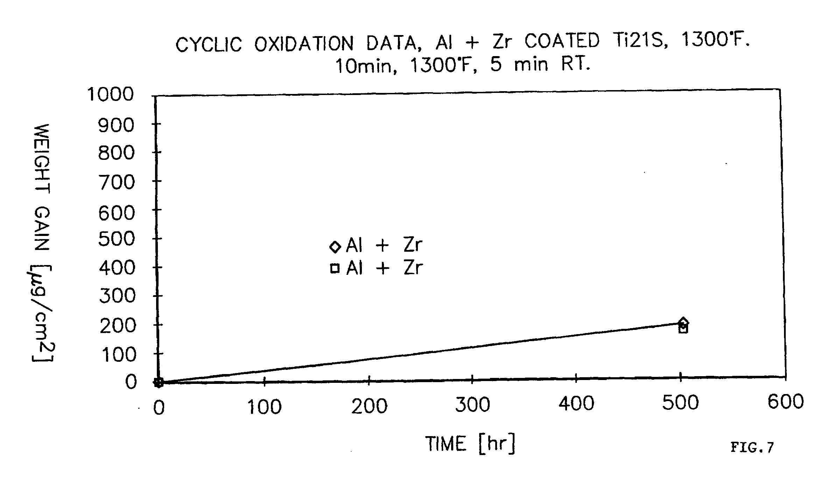

Often protective coatings have a short life because they can not withstand the stresses set up by thermally cycling the part. The conversion coatings of the present invention can be applied through heat treatment to become integrated with the base metal and as is illustrated, Fig. 7 cycling to 704°C (1300°F) every 15 minutes for 1,000 hours results in no flaking of the transformed metal or zirconium solgel coating. In fact, examination showed no change in the surface. According the titanium aluminide and solgel coatings are understood to provide mechanical properties sufficient to provide an oxidation resistant and reliable heat exchanger.

Although, the invention has been described with particular reference to the attached drawings in connection with a plate fin heat exchanger, it should be noted that it is equally applicable to other forms of heat exchanger.

## Claims

1. A titanium-based metal heat exchanger (10) operable at a temperature in excess of 482°C (900°F) comprising
a plurality of plates (11) made of titanium-based metal;
a plurality of spacers (12) made of titanium-based metal, which separate said plates from each other so as to form a structure comprising alternating plates and spacers, and fluid passages (13) defined between the plates;
a braze clad bonding attaching the spacers to the plates; and
an oxidation resistant protective layer covering at least one of the plates, the protective layer being either:
i) a titanium aluminide coating having a surface layer of aluminium oxide; or
ii) a solgel layer selected from the group consisting of zirconia, alumina and silica, obtainable by applying to the at least one plate a solgel solution having a viscosity of below 0.1 Pa.s (100 cP).

2. A heat exchanger according to claim 1, wherein the protective layer comprises said titanium aluminide coating having a surface layer of aluminium oxide.

3. A heat exchanger according to claim 2, wherein the protective layer is obtainable by gaseous deposition of an aluminium coating and subsequent heat treatment.

4. A heat exchanger according to claim 1, wherein the protective layer comprises said solgel layer selected from zirconia, alumina and silica.

5. A heat exchanger according to claim 4, wherein said solgel layer is selected from zirconia and alumina.

6. A heat exchanger according to claim 1, wherein said solgel layer is applied over a titanium aluminide coating having a surface layer of aluminium oxide.

7. A heat exchanger according to any preceding claim, further including manifolds for directing fluids into and out of the fluid passages formed by the plates and spacers.

8. A heat exchanger according to any preceding claim, wherein the protective layer covers all exposed parts of the heat exchanger.

9. A method for manufacturing a titanium-based metal heat exchanger (10) operable at a temperature in excess of 482°C (900°F), comprising
providing a heat exchanger comprising a plurality of plates (11) made of titanium-based metal; a plurality of spacers (12) made of titanium-based metal, which separate said plates from each other so as to form a structure comprising alternating plates and spacers, and fluid passages (13) defined between the plates; and a braze clad bonding attaching the spacers to the plates; and
applying to at least one of the plates an oxidation resistant protective layer either by:
i) gaseous deposition of an aluminium coating and subsequent heat treatment thereof, to form a titanium aluminide coating having a surface layer of aluminium oxide; or
ii) application of a solgel solution having a viscosity of below 0.1 Pa.s (100 cP), to obtain a solgel layer selected from the group consisting of zirconia, alumina and silica.

## Patentansprüche

1. Metallwärmetauscher auf Titanbasis (10), betriebsfähig bei einer Temperatur von mehr als 482 °C (900 °F), umfassend:
mehrere Platten (11), die aus Metall auf Titanbasis hergestellt sind;
mehrere Abstandsstücke (12), die aus Metall auf Titanbasis hergestellt sind, welche die Platten voneinander trennen, um eine Struktur zu bilden, die abwechselnd Platten und Abstandsstücke, und Fluiddurchgänge (13) umfaßt, die zwischen den Platten definiert sind;
eine messingplattierte Verbindung, welche die Abstandsstücke an den Platten befestigt; und
eine oxidationsbeständige Schutzschicht, die mindestens eine der Platten bedeckt, wobei die Schutzschicht entweder aus
i) einem Titanaluminidüberzug, der eine Oberflächenschicht aus Aluminiumoxid aufweist; oder
ii)einer Sol-Gel-Schicht, die aus der Gruppe ausgewählt wurde, die aus Zirkondioxid, Aluminiumoxid und Siliciumdioxid besteht,
besteht, die erhalten werden kann, indem auf mindestens eine Platte eine Sol-Gel-Lösung aufgebracht wird, die eine Viskosität von weniger als 0,1 Pa.s (100 cP) aufweist.

2. Wärmetauscher nach Anspruch 1, wobei die Schutzschicht den Titanaluminidüberzug umfaßt, der eine Oberflächenschicht aus Aluminiumoxid aufweist.

3. Wärmetauscher nach Anspruch 2, wobei die Schutzschicht durch gasförmiges Abscheiden eines Aluminiumüberzugs und anschließende Wärmebehandlung erhalten werden kann.

4. Wärmetauscher nach Anspruch 1, wobei die Schutzschicht die Sol-Gel-Schicht ausgewählt von Zirkondioxid, Aluminiumoxid und Siliciumdioxid umfaßt.

5. Wärmetauscher nach Anspruch 4, wobei die Sol-Gel-Schicht aus Zirkondioxid und Aluminiumoxid ausgewählt wird.

6. Wärmetauscher nach Anspruch 1, wobei die Sol-Gel-Schicht über einem Titanaluminidüberzug aufgebracht ist, der eine Oberflächenschicht aus Aluminiumoxid aufweist.

7. Wärmetauscher nach einem der vorhergehenden Ansprüche, des weiteren umfassend Verteiler zum Leiten von Fluiden in die und aus den Fluiddurchgängen, die durch die Platten und Abstandsstücke gebildet werden.

8. Wärmetauscher nach einem der vorhergehenden Ansprüche, wobei die Schutzschicht alle freiliegenden Teile des Wärmetauschers bedeckt.

9. Verfahren zum Herstellen eines Metallwärmetauschers auf Titanbasis (10), betriebsfähig bei einer Temperatur von mehr als 482 °C (900 °F), umfassend:
das Bereitstellen eines Wärmetauschers mit mehreren Platten (11), die aus Metall auf Titanbasis hergestellt sind; mehreren Abstandsstücken (12), die aus Metall auf Titanbasis hergestellt sind, welche die Platten voneinander trennen, um eine Struktur zu bilden, die abwechselnd Platten und Abstandsstücke, und Fluiddurchgänge (13) umfaßt, die zwischen den Platten definiert sind; und einer messingplattierten Verbindung, welche die Abstandsstücke an den Platten befestigt; und
das Aufbringen einer oxidationsbeständigen Schutzschicht auf mindestens einer der Platten, entweder durch:
i) gasförmiges Abscheiden eines Aluminiumüberzugs und dessen anschließende Wärmebehandlung, um einen Titanaluminidüberzug zu bilden, der eine Oberflächenschicht aus Aluminiumoxid aufweist; oder
ii) Aufbringen einer Sol-Gel-Lösung mit einer Viskosität von weniger als 0,1 Pa.s (100 cP), um eine Sol-Gel-Schicht zu erhalten, die aus der Gruppe ausgewählt wird, die aus Zirkondioxid, Aluminiumoxid und Siliciumdioxid besteht.

## Revendications

1. Echangeur thermique en métal à base de titane (10) capable de fonctionner à une température dépassant 482°C (900°F), comprenant
une pluralité de plaques (11) constituées de métal à base de titane;
une pluralité d'écarteurs (12) constitués de métal à base de titane, qui séparent lesdites plaques les unes des autres de manière à former une structure comprenant des plaques et des écarteurs alternés, et des passages de fluide (13) définis entre les plaques;
un assemblage par brasage pour attacher les écarteurs aux plaques; et
une couche de protection résistant à l'oxydation couvrant au moins une des plaques, la couche de protection étant soit:
i) un revêtement d'aluminure de titane présentant une couche de surface d'oxyde d'aluminium; soit
ii) une couche de gel soluble sélectionnée parmi le groupe composé de zircone, d'alumine et de silice, que l'on peut obtenir en appliquant à la au moins une plaque une solution de gel soluble présentant une viscosité inférieure à 0,1 Pa.s (100 cP).

2. Echangeur thermique suivant la revendication 1, dans lequel la couche de protection comprend ledit revêtement d'aluminure de titane présentant une couche de surface d'oxyde d'aluminium.

3. Echangeur thermique suivant la revendication 2, dans lequel la couche de protection peut être obtenue par dépôt gazeux d'un revêtement d'aluminium suivi par un traitement thermique.

4. Echangeur thermique suivant la revendication 1, dans lequel la couche de protection comprend ladite couche de gel soluble sélectionée parmi la zircone, l'alumine et la silice.

5. Echangeur thermique suivant la revendication 4, dans lequel ladite couche de gel soluble est sélectionnée parmi la zircone et l'alumine.

6. Echangeur thermique suivant la revendication 1, dans lequel ladite couche de gel soluble est appliquée sur un revêtement d'aluminure de titane présentant une couche de surface d'oxyde d'aluminium.

7. Echangeur de chaleur suivant l'une quelconque des revendications précédentes, comprenant en outre des collecteurs pour diriger des fluides dans et hors des passages de fluide formés par les plaques et les écarteurs.

8. Echangeur thermique suivant l'une quelconque des revendications précédentes, dans lequel la couche de protection couvre toutes les parties exposées de l'échangeur thermique.

9. Procédé de fabrication d'un échangeur thermique en métal à base de titane (10) capable de fonctionner à une température dépassant 482°C (900°F), comprenant
la fourniture d'un échangeur thermique comprenant une pluralité de plaques (11) constituées de métal à base de titane; une pluralité d'écarteurs (12) constitués de métal à base de titane, qui séparent lesdites plaques les unes des autres de manière à former une structure comprenant des plaques et des écarteurs alternés, et des passages de fluide (13) définis entre les plaques; et un assemblage par brasage pour attacher les écarteurs aux plaques; et
l'application sur au moins une des plaques d'une couche de protection résistant à l'oxydation soit par:
i) dépôt gazeux d'un revêtement d'aluminium suivi par un traitement thermique de celui-ci, afin de former un revêtement d'aluminure de titane présentant une couche de surface d'oxyde d'aluminium; soit par
ii) l'application d'une solution de gel soluble présentant une viscosité inférieure à 0,1 Pa.s (100 cP), afin d'obtenir une couche de gel soluble sélectionnée parmi le groupe composé de zircone, d'alumine et de silice.
